# EUROPEAN PATENT SPECIFICATION

(11) **EP 1 275 561 B1**
(45) Date of publication and mention of the grant of the patent: **28.07.2004**
(21) Application number: 01127519.5
(22) Date of filing: 17.11.2001
(51) Int. Cl.: B60R 11/02, B60N 3/02

(54) **Vehicle hands-free unit**
Freisprecheinheit für Fahrzeuge
Unité mains-libres pour véhicule

(30) Priority: 12.07.2001 KR 2001042064; 19.10.2001 KR 2001064540
(43) Date of publication of application: 15.01.2003
(73) Proprietor: KIA MOTORS CORPORATION, Seoul 137-938 (KR)
(72) Inventor: Park, June Ha, Bundang-gu Sungnam-si Gyeonggi-do463-776 (KR); Hong, Jong Myeon, Guro-gu Seoul 152-051 (KR)
(74) Representative: KOHLER SCHMID + PARTNER

(56) References cited:
- EP-A- 1 247 695
- FR-A- 2 397 301
- GB-A- 2 333 924
- US-A- 5 566 224

## Description

### (a) Field of the Invention

The present invention relates to a hands-free unit for a vehicle, and more particularly to, an independent hands-free unit which has a secret conversation function, a microphone conversation function, recording/reproducing functions, etc. and is installed in an assist handle that is mounted at a side of a driver's seat in a vehicle, so that a space of the assist handle may be effectively utilized. Further, the present invention relates to a vehicle hands-free unit, of which a conversation switch position for receiving a telephone call with a mobile phone is fixed, so that the convenience and the safety of a driver may be guaranteed. Also, a distance between a microphone and the driver is maintained to be minimum for realizing an optimum sound effect. The convenience and the safety of the driver may be even enhanced by providing a voice recognition function, a recording function for conversation content, and a muting control function for a car stereo system as desired.

### (b) Description of the Related Art

When a driver wants to speak over a mobile phone while driving a vehicle, he has to hold the mobile phone in a hand and hold a vehicle driving wheel with the other hand, so that the driver is apt to watch forward carelessly and it is difficult to drive the vehicle safely, causing a vehicle accident. Therefore, there is a tendency toward legal regulation on the speaking over the mobile phone in a vehicle directly grasping the telephone.

Therefore, some vehicle manufacturing companies have developed a vehicle speaker, which enables a telephone call in a certain radio frequency band by connecting a hands-free unit to a vehicle audio system.

Recently, a battery of such a mobile phone may be recharged in a vehicle and various hands-free units have been additionally developed to provide users with a secret conversation function, a microphone conversation function, recording/reproducing functions and the like, and such hands-free units are usually mounted onto an in-panel.

Such a prior art vehicle telephone system using a radio frequency band has, however, disadvantages that telephone signals of a certain radio frequency band are mixed with radio signals of other frequency bands and a driver has to directly manipulate switches mounted to a mobile telephone terminal inconveniently since a conversation switch and other switches are not provided to the radio speaker system.

Further, recent integration type hands-free units have also disadvantages that such hands-free units are not provided with multiple functions and a good-looking appearance, and degrade the interior of a vehicle due to the attachment or detachment of the hands-free units to an inside of a vehicle. More seriously, the hands-free units may cause a driver or other passengers to be wound since the hands-free units are apt to be detached in case of vehicle collision.

Such a prior art hands-free system has further disadvantages that the hands-free unit has to be mounted in the vicinity of the driver for dialing a telephone number by the mobile phone since the hands-free unit has no voice signal transmission function, and that a driver has to turn off the audio system or decrease a sound output level of the audio system manually since the hands-free unit is impossible to carry out functions in association with a car stereo system.

In the meantime, an assist handle that a driver or a passenger holds to keep balance when a vehicle is seriously shaking while running, is mounted to a ceiling, a dash board in front of a seat next to the driver, or a rear surface of a seat, in the vicinity of a head part of the driver or the passenger, and the prior art assist handle has no function other than the above function so far.

GB 2 333 924 A discloses a motor vehicle communication arrangement comprising a microphone and loudspeaker which are mounted about the upper periphery of a motor vehicle body door jamb allowing hands-free communication. The communication device may be a mobile telephone or a traffic information system or an external hailer communication apparatus. The microphone and loudspeaker are mounted in the recess normally used to mount a grab handle. The microphone and/or speaker preferably have uni-directional performance and can be arranged so that both are directed at the user's head.

### SUMMARY OF THE INVENTION

Accordingly, the present invention is directed to a hands-free unit for a vehicle that substantially obviates one or more of the problems due to limitations and disadvantages of the prior art.

An object of the present invention is to provide a hands-free unit for a vehicle, which is independently mounted in an assist handle integrating a secret conversation function, a microphone conversation function, recording/reproducing functions, etc., so that a space of the assist handle may be effectively utilized.

Another object of the present invention is to provide a hands-free unit for a vehicle, which may improve the convenience of using a mobile phone in a vehicle without disturbing the driving of a vehicle, thereby guaranteeing the safety of the vehicle driving.

A further object of the present invention is to provide a hands-free unit for a vehicle which may realize a maximum sound effect by reducing a distance from a driver to a microphone and smooth conversation over a mobile phone by dialing a telephone number or setting a mode with voice, if necessary, and automatically muting an output of a car stereo system during telephone conversation.

To achieve these and other advantages and in accordance with the purpose of the present invention, as embodied and broadly described, a hands-free unit for a vehicle is incorporated in an assist handle and the assist handle includes a front part mounted with a speaker, a secret conversation button, a reproduction button, a recording button, and a conversation button, a side part mounted with a microphone sound level control lever, an ear-microphone connection jack, a sound level control lever, and an interior part installed with a main board of a hands-free unit inside. According to a preferred embodiment of the invention, the main board includes a voice recognition controller for determining signals, which are output from a voice recognition microphone, to output control signals for determining an operation mode of the hands-free unit and simultaneously output a muting control signal for a car stereo control part, a recording control part for controlling an operation of the recording/reproducing part according to a control signal output from the voice recognition controller to record or reproduce conversation content, a car stereo to be muted according to the muting control signal output from the voice recognition controller for bypassing output sounds, a digital signal processing part for processing signals, which are output from the conversation microphone, to digital signals to be supplied to a mobile phone and for supplying signals output from the mobile phone to the speaker, and a power supply part for supplying power output from a vehicle battery to the mobile phone.

Therefore, according to the hands-free unit for a vehicle according to the present invention, a user may utilize a space of the assist handle more effectively, and speak over the mobile phone conveniently without any bad influence to the driving of a vehicle. Further, a distance between a microphone and a driver is reduced for realizing maximum sound effect, dialing a telephone number and setting a mode are achieved by voice input, and an output of a car stereo system is automatically muted for more comfortable telephone conversation.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a plane view showing a hands-free unit according to a preferred embodiment of the present invention;
Fig. 2 is a side view of a hands-free unit according to the present invention, which is installed in a vehicle;
Fig. 3 is a perspective view of a hands-free unit according to the present invention;
Fig. 4 is a block diagram of a hands-free unit according to another preferred embodiment of the present invention; and
Fig. 5 is a plane view of a keypad for a recording/reproducing part as shown in Fig. 4, in which operation of the keypad is illustrated.

### DETAILED DESCRIPTION OF THE PREFERRED EMBODIMENTS

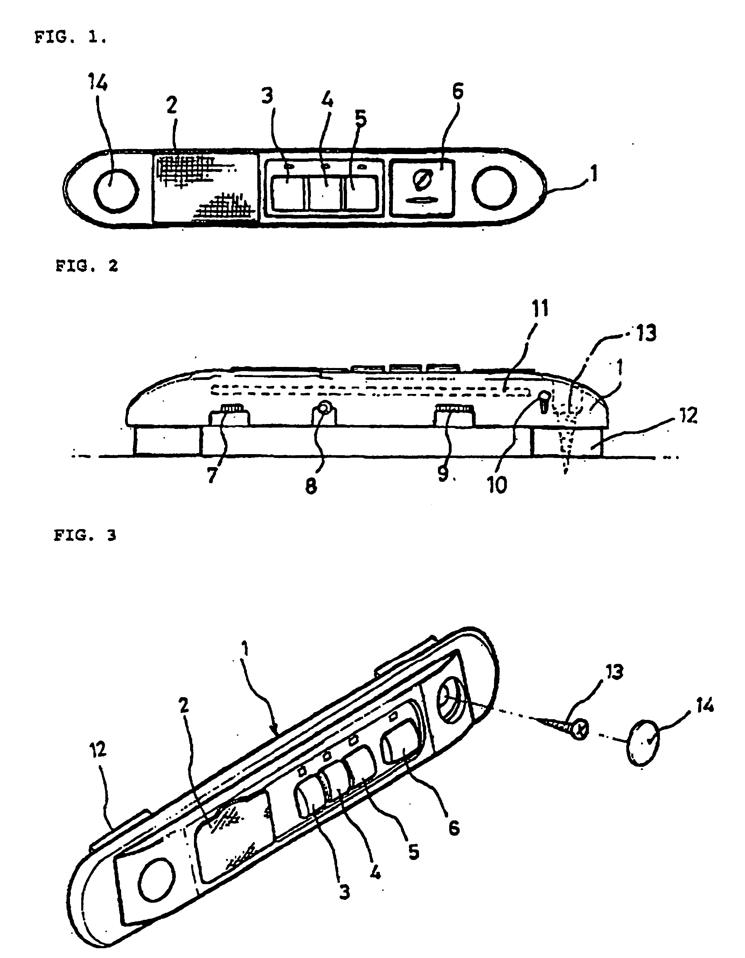

Reference will now be made in detail to preferred embodiments of the present invention, examples of which are illustrated in Fig. 1 to Fig. 5.

Fig. 1 is a plane view of a hands-free unit for a vehicle according to the present invention, Fig. 2 is a side view of the hands-free unit for a vehicle according to the present invention, which is installed in a vehicle, and Fig. 3 is a perspective view of the hands-free unit for a vehicle according to the present invention.

According to the present invention, an assist handle 1 is mounted at a side of a driver's seat, of which a front part is mounted with a speaker 2 for listening to a conversation voice of the other party, a secret conversation button 3 for converting telephone signals to an ear-microphone when a personal telephone conversation is selected, a reproducing button 4 for reproducing recorded contents, a recording button 5 for recording telephone conversation contents partially, and a conversation button 6 for receiving a telephone call, a side part is mounted with a microphone sound level control lever 7 for controlling a sound level of a microphone, an ear-microphone connection jack 8 for the alternative connection with the ear-microphone, a sound level control lever 9 for controlling a level of sound to be received, and the microphone 10 for converting sound signals to electric signals to be transmitted to the other party, and an inside mounted with a main board 11 of a hands-free unit.

Wherein, reference symbol 12 which is not explained above represents a spacer mounted between the assist handle 1 and a ceiling for the insertion of a hand, reference symbol 13 represents a fixing screw, and reference symbol 14 represents a finishing element for covering the fixing screw not to be shown.

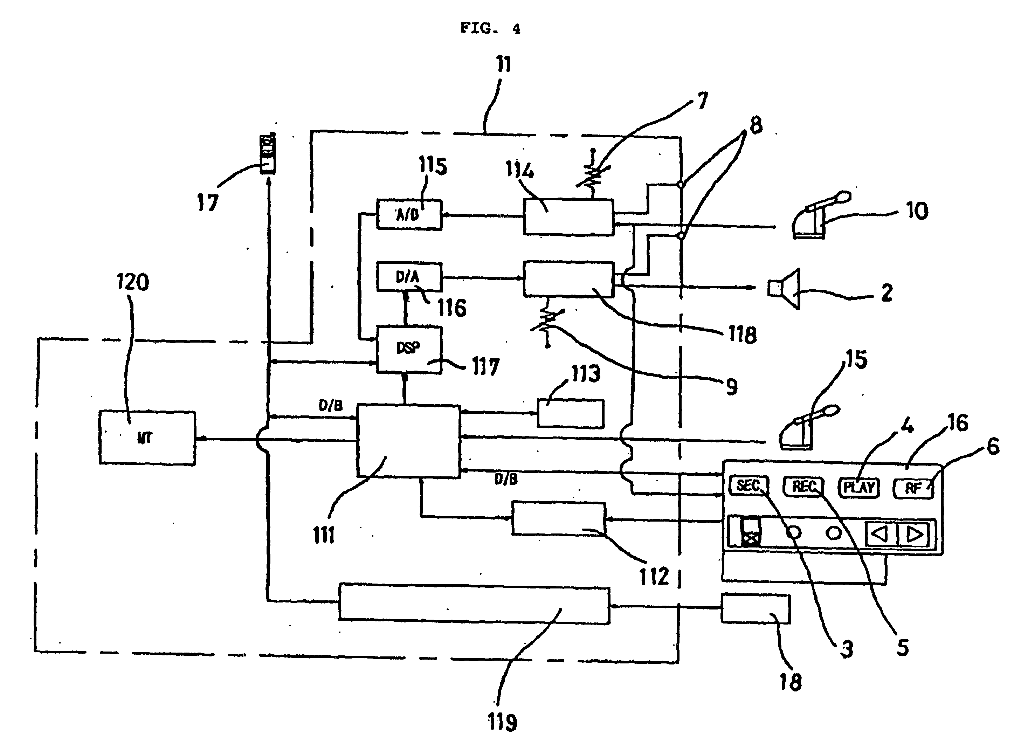

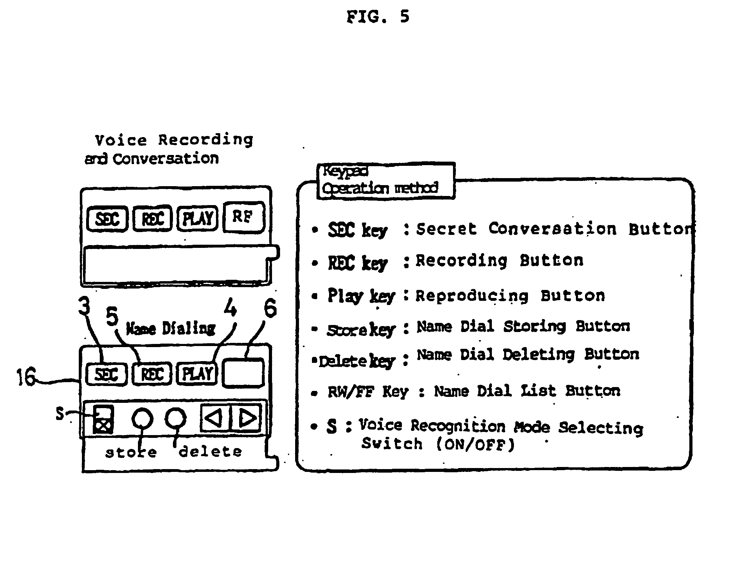

Fig. 4 is a block diagram showing a hands-free unit according to another embodiment of the present invention, and Fig. 5 is a plane view of a key pad of a recording/reproducing part as shown in Fig. 4, in which an operation method of the key pad is illustrated.

The main board 11 includes a voice recognition controller 111 for determining signals which is output from a voice recognition microphone 15 to output control signals for determining an operation mode of the hands-free unit and to simultaneously output a muting control signal for a car stereo control part, a recording control part 112 for controlling an operation of the recording/reproducing part according to a control signal which is output from the voice recognition controller 111 to record or reproduce conversation contents, a car stereo control part 120 to be muted according to the muting control signal which is output from the voice recognition controller 111 for bypassing output sounds, a digital signal processing part 117 for processing signals output from the conversation microphone to digital signals to be supplied to a mobile phone 17 and supplying signals output from the mobile phone 17 to a speaker 2, and a power supply part 119 for supplying power output from a vehicle battery 18 to the mobile phone 17.

Now, the operation of the hands-free unit for a vehicle according to the present invention will be described in more detail.

According to the present invention, the hands-free unit is integrated in the assist handle 1 for a driver with a voice dialing function using the voice recognition microphone and an automatic output muting function for the car stereo system in addition to the secret conversation function, the microphone conversation function, and the recording/reproducing functions. When a user wishes to have a general telephone conversation without tuning on the car stereo system, a mobile phone connection cord is completely inserted in an ear-phone jack of the mobile phone and the ear-microphone jack 8, the hands-free unit may be used only when a vehicle ignition key is in an accessory position or the vehicle has been started, and a telephone call may be received by pushing the conversation button 6 of the hands-free unit, wherein the telephone call is stopped by pressing the conversation button again.

The voice recognition controller 111 in the main board determines a signal output from the voice recognition microphone 15, which is turned on or off by the user, so as to output the recording control signal, the muting control MT signal, and the power supply control signal. The car stereo control part 120, which is generally installed in a vehicle, bypasses output sounds according to the muting control signal which is output from the voice recognition controller.

The recording control part 112 controls the operation of the recording/reproducing part 16 according to a control signal output from the voice recognition controller 111, so as to record conversation contents and reproduce the same. The digital signal processing part 117 processes signals, which has passed via a pre-amplifier 114 and an analogue/digital converter 115, to digital signals to be supplied to the mobile phone 17, while supplying signals which are output from the mobile phone 17 to the speaker 2 via a digital/analogue converter 116 and an audio signal amplifying part 118.

Therefore, in a running vehicle that the hands-free unit is installed in the driver's assist handle 1 according to the present invention, a power supply terminal of the mobile phone 17 is connected to the power supply part 119, the ear-phone jack terminal of the mobile phone 17 is connected to the voice recognition controller 111, and a voice is input to the voice recognition microphone 15 for operating the mobile phone when the car stereo control part 120 is in operation.

As the voice signal for operating the mobile phone is input to the voice recognition microphone 15, the voice recognition controller 111 determines the voice signal and outputs a control signal for converting the mobile phone 17 into a conversation mode simultaneously with supplying a muting control signal to a mute terminal MT of the car stereo control part 120, thereby muting the signal output from the car stereo system.

After the mobile phone 17 is converted into the conversation mode as above, signals received by the mobile phone 17 and supplied to the earphone terminal are supplied to the speaker 2 via the digital signal processing part 117, the digital/analogue converter 116 and the amplification part 118. Then, signals input to the conversation microphone 10 in response to the signal output by the speaker are supplied to the microphone output terminal of the mobile phone via the pre-amplifier 114, the analogue/digital converter 115 and the digital signal processing part 117, thereby achieving the telephone conversation.

In order to record a telephone conversation contents in the hands-free unit as above, a recording terminal REC is selected in a key pad of the recording/reproducing part 16, as shown in Fig. 5, and a voice signal is input to the microphone 10, so that the voice recognition controller 111 supplies a recording signal to the recording control part 112, and response contents input to the microphone 10 and the received conversation contents output from the digital signal processing part 117 are stored in the recording/reproducing part 16.

In order to record conversation contents partially during the telephone conversation as above, the user has to press the recording button 5. In the preferred embodiment of the present invention, hardware and software are constituted for carrying out the recording for totally 60 seconds through three section channels, of which each section is set to 20 seconds, a warning sound is generated about 5 seconds before finishing the recording per channel, and the recording is automatically turned off after finishing the recording. As for a continuous recording, the software is programmed to proceed with the continuous recording by pressing the recording button twice as the recording finish warning sound is generated.

If the reproduction button 4 is pressed for reproducing conversation contents which are recorded in a recording media in the recording/reproducing part 16, a reproduction signal output from the recording/reproducing part 16 is supplied to the speaker 2 via the voice recognition controller 111, the digital signal processing part 117 and the audio signal amplification part 118, thereby reproducing the conversation contents.

At this time, the software is programmed to reproduce final recording contents when the reproduction button is pressed short, while to reproduce all the recording contents from the beginning when the reproduction button is pressed long, approximately for one second. Further, if the mobile phone is ringing in the process of the reproduction, the conversation function is carried out with a priority rather than the reproducing function.

In order to carry out the secret conversation, a secret conversation SEC button 3 is pressed, so that the voice recognition controller 111 supplies the signals received by the mobile phone not to the speaker 2 but to the recording/reproducing part 16 to record the received signals and simultaneously carries out the conversation via the ear-microphone, while stopping the functions of the speaker 2 and the microphone 10.

As described hereinabove, according to the present invention, the driver's assist handle for a driver to hold for keeping balance when a vehicle is seriously shaking is incorporated with the hands-free unit for a vehicle, which is integrated with not only the secret conversation function, the microphone conversation function, the recording/reproducing functions, but also the voice dialing function and the automatic muting function for the car stereo system as desired, so that the space of the assist handle may be effectively utilized and the telephone conversation may be conveniently and safely carried out without disturbing the driving of a vehicle, wherein the distance between the microphone and the driver is reduced for realizing the maximum sound effect, and the telephone conversation may be carried out more comfortably by dialing a telephone number and setting a mode with voice input and automatically muting the car stereo system during the telephone conversation.

It will be apparent to those skilled in the art that various modifications and variations can be made to the device of the present invention without departing from the scope of the invention. The present invention covers the modifications and variations of this invention provided they come within the scope of the appended claims

## Claims

1. An assist handle (1) comprising a hands-free unit for a vehicle **characterized in that** the hands-free unit is incorporated in the assist handle (1) and the assist handle (1) comprises a front part mounted with a speaker (2), a secret conversation button (3), a reproduction button (4), a recording button (5), and a conversation button (6); a side part mounted with a microphone sound level control lever (7), an ear-microphone connection jack (8), a sound level control lever (9); and an interior part installed with a main board (11) of the hands-free unit inside.

2. An assist handle (1) comprising a hands-free unit according to claim 1, wherein the main board (11) comprises a voice recognition controller (111) for determining signals, which are output from a voice recognition microphone (15), to output control signals for determining an operation mode of the hands-free unit and simultaneously output a muting control signal for a car stereo control part;
a recording control part (112) for controlling an operation of the recording/reproducing part according to a control signal output from the voice recognition controller (111) to record or reproduce conversation content;
a car stereo control part (120) to be muted according to the muting control signal output from the voice recognition controller (111) for bypassing output sounds; a digital signal processing part (117) for processing signals, which are output from the conversation microphone, to digital signals to be supplied to a mobile phone (17) and for supplying signals output from the mobile phone (17) to the speaker (2); and a power supply part (119) for supplying power output from a vehicle battery (18) to the mobile phone (17).

## Patentansprüche

1. Hilfshandgriff (1), umfassend eine Freisprecheinheit für ein Fahrzeug, **dadurch gekennzeichnet, dass** die Freisprecheinheit in den Hilfshandgriff (1) eingebaut ist und der Hilfshandgriff (1) ein Vorderteil, welches mit einem Lautsprecher (2), einem Geheimgesprächsknopf (3), einem Wiedergabeknopf (4), einem Aufnahmeknopf (5) und einem Gesprächsknopf (6) befestigt ist, ein Seitenteil, welches mit einem Mikrophongeräuschpegel-Steuerhebel (7), einem Ohrmikrophon-Verbindungsteil (8), einem Geräuschpegel-Steuerhebel (9) befestigt ist, und ein Innenteil, welches mit einem Hauptboard (11) der Freisprecheinheit innen installiert ist, aufweist.

2. Hilfshandgriff (1), umfassend eine Freisprecheinheit gemäß Anspruch 1, wobei das Hauptboard (11) umfasst:
eine Stimmenerkennungssteuereinheit (111) zum Bestimmen von Signalen, welche von einem Stimmenerkennungsmikrophon (15) ausgegeben werden, um Steuersignale zum Bestimmen eines Betriebsmodus der Freisprecheinheit auszugeben und gleichzeitig ein Dämpfungssteuersignal für eine Autostereo-Steuereinheit auszugeben;
ein Aufnahmesteuerteil (112) zum Steuern eines Betriebs des Aufnahme/Wiedergabeteils gemäß einem Steuersignal, das von der Stimmenerkennungssteuereinheit (111) ausgegeben wird, um Gesprächsinhalte aufzunehmen oder wiederzugeben;
ein Autostereo-Steuerteil (120), das gemäß dem Dämpfungssteuersignal, welches von der Stimmenerkennungssteuereinheit (111) zur Weitergabe von Ausgabegeräuschen ausgegeben wird, gedämpft werden soll;
ein Digitalsignal-Verarbeitungsteil (117) zum Verarbeiten von Signalen, welche von dem Gesprächsmikrophon ausgegeben werden, in digitale Signale, die einem Mobiltelefon (17) zugeliefert werden sollen, und zum Liefern von Signalen, die von dem Mobiltelefon (17) ausgegeben werden, an den Lautsprecher (2); und
ein Spannungsversorgungsteil (119) zum Liefern von Leistung, die von einer Fahrzeugbatterie (18) ausgegeben wird, an das Mobiltelefon (17).

## Revendications

1. Poignée pour se tenir (1) comprenant une unité mains libres pour un véhicule **caractérisé en ce que** l'unité mains libres est incorporée dans la poignée pour se tenir (1) et la poignée pour se tenir (1) comprend :
une partie avant pourvue d'un haut-parleur (2), d'un bouton de conversation secrète (3), d'un bouton de reproduction (4), d'un bouton d'enregistrement (5), et d'un bouton de conversation (6) ;
une partie latérale pourvue d'un levier de commande de niveau de son de microphone (7), d'un jack de connexion d'écouteur-microphone (8), d'un levier de commande de niveau de son (9) ; et
une partie interne installée avec une carte principale (11) de l'unité mains libres interne.

2. Poignée pour se tenir (1) comprenant une unité mains libres selon la revendication 1, dans laquelle la carte principale (11) comprend un dispositif de commande de reconnaissance vocale (111) pour déterminer des signaux qui sont fournis par un microphone de reconnaissance vocale (15), pour fournir des signaux de commande pour déterminer un mode de fonctionnement de l'unité mains libres et fournir simultanément un signal de commande rendant silencieuse une partie de commande stéréo de véhicule ;
une partie de commande d'enregistrement (112) pour commander un fonctionnement de la partie d'enregistrement/reproduction selon un signal de commande fourni par le dispositif de commande de reconnaissance vocale (111) pour enregistrer ou reproduire un contenu de conversation ;
une partie de commande stéréo de véhicule (120) à rendre silencieuse selon le signal de commande rendant silencieux fourni par le dispositif de commande de reconnaissance vocale (111) pour court-circuiter des sons de sortie ;
une partie de traitement de signal numérique (117) pour traiter des signaux, qui sont fournis par le microphone de conversation, en signaux numériques à appliquer à un téléphone mobile (17) et pour appliquer des signaux fournis par le téléphone mobile (17) au haut-parleur (2) ; et
une partie d'alimentation (119) pour appliquer une alimentation fournie par une batterie (18) au téléphone mobile (17).
